# FASCICULE DE BREVET EUROPEEN

(11) **EP 3 518 282 B1**
(45) Date de publication et mention de la délivrance du brevet: **13.07.2022**
(21) Numéro de dépôt: 19153301.7
(22) Date de dépôt: 23.01.2019
(51) Int. Cl.: H01L 23/58, H01L 23/48, H01L 23/522

(54) **PUCE ELECTRONIQUE A FACE ARRIERE PROTEGEE CONTRE DES ATTAQUES PIRATES**
ELEKTRONISCHER CHIP, DESSEN RÜCKSEITE GEGEN HACKING-ANGRIFFE GESCHÜTZ IST
ELECTRONIC CHIP WITH REAR SURFACE PROTECTED FROM HACKING ATTACKS

(30) Priorité: 25.01.2018 FR 1850604
(43) Date de publication de la demande: 31.07.2019
(73) Titulaire: Commissariat à l'énergie atomique et aux énergies alternatives, 75015 Paris (FR)
(72) Inventeur: BOREL, Stephan, 38920 CROLLES (FR); DUPERREX, Lucas, 38000 GRENOBLE (FR)
(74) Mandataire: Brevalex

(56) Documents cités:
- EP-A1- 2 866 259
- EP-A2- 3 086 368
- WO-A1-2009/116677

## Description

L'invention concerne la protection des puces électroniques, et porte sur une puce électronique comportant notamment des moyens protégeant la face arrière de la puce électronique et permettant d'empêcher l'accès au circuit électronique de la puce depuis sa face arrière. L'invention s'applique à tout type de puce électronique : puce de téléphonie mobile, de carte bancaire, de carte santé, de document d'identité, etc.

Les attaques que peut subir une puce électronique ont généralement pour but d'accéder à des données confidentielles stockées dans le circuit électronique de la puce afin de la cloner, de modifier les informations stockées, d'usurper l'identité de son possesseur, etc. Une puce électronique peut être attaquée de multiples manières : chimique, physique, laser, électromagnétique, électrique, logicielle, etc.

Sur une puce électronique dite « sécurisée », la face avant, c'est-à-dire la face de la puce du côté de laquelle se trouve le circuit électronique, est généralement protégée par de multiples moyens.

Les éléments de protection de la face avant de la puce peuvent servir à empêcher l'accès aux zones sensibles du circuit électronique. Par exemple, une couche métallique disposée au niveau de la face avant de la puce peut former un écran opaque aux rayons infrarouges et empêcher ainsi les attaques par injection de fautes réalisées à l'aide d'un laser infrarouge. En outre, une piste métallique disposée au niveau de la face avant de la puce électronique peut servir à empêcher un attaquant de poser des pointes de test sur des zones de transit ou de stockage d'informations sensibles afin d'en lire le contenu.

Les éléments de protection de la face avant de la puce peuvent également servir à détecter et renseigner le circuit électronique de la puce d'une attaque ou d'une tentative d'attaque afin de déclencher une réaction permettant de protéger les données convoitées. Par exemple, une photodiode peut permettre, par une mesure d'intensité lumineuse, de déceler l'utilisation d'un laser à des fins d'injection de fautes dans le circuit électronique de la puce.

Par contre, la face arrière de la puce électronique est généralement moins bien protégée et constitue donc une voie d'accès privilégiée à la face avant. Sans moyens de protection de cette face arrière, rien ne s'oppose à la mise en œuvre d'un amincissement du substrat de la puce depuis sa face arrière, ou à la réalisation de défaillances électroniques au laser infrarouge (« glitch »), le silicium (qui est le matériau généralement utilisé) du substrat étant transparent aux longueurs d'onde caractéristiques de l'infrarouge. L'accès au circuit électronique de la puce obtenu permet ensuite de réaliser par exemple une lecture des données via l'obtention de la clé de chiffrement utilisée dans le circuit.

Pour protéger la face arrière d'une puce, il est possible par exemple de réaliser un réflecteur sur la face arrière qui, couplé à un émetteur/récepteur disposé en face avant, permet de vérifier l'intégrité de la face arrière car en cas d'attaque par amincissement, ce réflecteur est alors altéré. Il est également possible de réaliser un condensateur 3D permettant, par mesure de capacité avec le substrat, de déceler un amincissement de la puce par sa face arrière.

Le document EP 3 086 368 A2 propose une solution de protection améliorée de la face arrière d'une puce basée sur plusieurs éléments:
- une structure de fragilisation formée de trous borgnes permettant de fragiliser la puce en cas d'amincissement de celle-ci depuis sa face arrière et, lorsque les parois des trous borgnes sont recouvertes par un film métallique, de former un écran de protection en 3D ;
- un élément résistif formant un serpentin métallique couvrant la face arrière de la puce et dont l'intégrité peut être vérifiée par la mesure de sa résistance ;
- une encapsulation par un polymère opaque aux infrarouges, résistant au FIB (sonde ionique focalisée) et plus résistant aux agents de gravure chimique (HNO₃ notamment) que le polymère disposé sous le serpentin métallique.

Du fait que les trous borgnes et les vias électriquement conducteurs, ou TSV ("Through Silicon Via"), qui relient électriquement l'élément résistif (en face arrière) au circuit électronique (en face avant) sont réalisés au cours d'une même étape de gravure pour des raisons de coût, une différence de profondeur entre les TSV et les trous borgnes est obtenue en utilisant le phénomène d'ARDE ("Aspect Ratio Dépendant Etching") selon lequel une profondeur de gravure plus importante est obtenue pour les motifs de plus grande largeur au cours d'une seule étape de gravure. Les TSV doivent donc être réalisés avec une section, dans le plan de la face arrière du substrat, de plus grandes dimensions que celle des trous borgnes.

L'inconvénient de cela est que, du côté de la face arrière de la puce électronique, les TSV sont reconnaissables visuellement à leur section plus grande que celle des trous borgnes. Cela permet donc à un attaquant de localiser facilement les extrémités de l'élément résistif. Cette localisation des extrémités de l'élément résistif rend possible la mesure de la valeur de la résistance électrique aux bornes de l'élément résistif, puis un branchement d'une résistance électrique de même valeur aux bornes des TSV. Il est alors possible de couper l'élément résistif sans déclencher de réaction de la part du circuit électronique puisque celui-ci mesure la même valeur de résistance électrique.

### EXPOSÉ DE L'INVENTION

Un but de la présente invention est de proposer une puce électronique comprenant une face arrière protégée et qui ne présente pas les inconvénients de l'art antérieur, c'est-à-dire comprenant un élément résistif de protection de sa face arrière dont les extrémités soient difficilement identifiables.

Pour cela, la présente invention propose une puce électronique comportant au moins :
- un circuit électronique disposé du côté d'une face avant d'un substrat ;
- un élément résistif disposé du côté d'une face arrière du substrat (qui est opposée à la face avant du substrat) et à l'aplomb d'au moins une partie du circuit électronique ;
- deux vias électriquement conducteurs, ou TSV, traversant le substrat et s'étendant entre les faces avant et arrière du substrat, chacun relié électriquement au circuit électronique et à l'une d'au moins deux extrémités de l'élément résistif tel que la valeur de la résistance électrique de l'élément résistif puisse être mesurée par le circuit électronique, et masqués au moins partiellement par l'élément résistif du côté de la face arrière du substrat ;
et a): comportant en outre une structure de fragilisation formée de trous borgnes tels que :
- chacun des trous borgnes traverse la face arrière du substrat et une partie de l'épaisseur du substrat,
- chacun des trous borgnes comporte une section, au niveau de la face arrière du substrat, de forme et de dimensions extérieures sensiblement similaires à celles de chacun des vias électriquement conducteurs, et
- dans chacun des trous borgnes, une portion du substrat s'étend entre la face arrière du substrat et une paroi de fond du trou borgne et est masquée par l'élément résistif du côté de la face arrière du substrat,
et/ou b):
dans laquelle l'élément résistif comporte des première et deuxième parties espacées l'une de l'autre, disposées au moins partiellement l'une au-dessus de l'autre telles que la première partie soit disposée entre la face arrière du substrat et la deuxième partie, reliées électriquement l'une à l'autre, et formant ensemble au moins un motif de serpentin et/ou plusieurs motifs alternés, entremêlés, enroulés ou entrelacés.

En réalisant une structure de fragilisation telle que spécifiée ci-dessus, il est impossible de distinguer optiquement les vias électriquement conducteurs par rapport aux trous borgnes de la structure de fragilisation. En effet, le motif des trous borgnes est tel que chacun comporte une section, au niveau de la face arrière du substrat, qui est de forme et de dimensions extérieures (c'est-à-dire la forme et les dimensions de chacun des trous borgnes au niveau de sa périphérie) sensiblement similaires à celles de chacun des vias électriquement conducteurs, et tel qu'au moins une portion du substrat soit destinée à être conservée dans chaque trou borgne. Ainsi, la surface de matériau du substrat exposée à la gravure pour former chacun des trous borgnes est plus petite que celle exposée pour former les vias électriquement conducteurs. Il en résulte que pour une même durée de gravure, en raison du phénomène d'ARDE, les profondeurs des trous borgnes obtenus sont inférieures à celles des vias. En outre, du fait que l'élément résistif masque les portions du substrat présentes dans les trous borgnes du côté de la face arrière du substrat, il est impossible de faire visuellement une distinction, du côté de la face arrière de la puce électronique, entre les vias électriquement conducteurs et les trous borgnes. Ainsi, un attaquant souhaitant localiser les vias électriquement conducteurs pour accéder aux extrémités de l'élément résistif n'a pas d'autre choix que de tester tous les trous (trous borgnes et vias) afin de vérifier s'il s'agit d'un trou borgne ou d'un vias électriquement conducteur, ce qui peut prendre du temps et a pour conséquence d'altérer l'élément résistif et donc de rendre cette attaque détectable par la puce électronique.

En outre, cette configuration de la structure de fragilisation ne modifie pas sa fonction première, à savoir former une protection vis-à-vis d'un amincissement mécanique ou d'un polissage de la puce électronique depuis sa face arrière, ainsi que vis-à-vis d'une attaque par FIB ou par gravure chimique de la face arrière de la puce électronique.

Grâce à la présence de l'élément résistif en face arrière de la puce électronique, si un amincissement mécanique ou un polissage de la face arrière de la puce électronique est mis en œuvre, cet amincissement ou ce polissage provoque l'altération de l'élément résistif. Cette altération de l'élément résistif est alors détectée par le circuit électronique de la puce qui pourra, par exemple, se mettre en défaut. De plus, en réalisant l'élément résistif avec deux parties superposées comme spécifié ci-dessus, il est très difficile de localiser les deux extrémités de cet élément résistif, la première partie de l'élément résistif étant masquée au moins partiellement par la deuxième partie de l'élément résistif. L'ensemble du motif de l'élément résistif n'est donc pas appréhendable visuellement par un attaquant depuis la face arrière de la puce électronique. La forme complexe de l'élément résistif contribue à empêcher une attaque consistant à remplacer l'élément résistif par une résistance électrique équivalente afin d'accéder au circuit électronique depuis la face arrière de la puce électronique.

Le motif de l'élément résistif est formé par l'ensemble de l'élément résistif, c'est-à-dire par les première et deuxième parties de l'élément résistif.

La présence de l'élément résistif en face arrière de la puce électronique forme également une protection vis-à-vis d'attaques par sonde ionique focalisée.

La puce électronique proposée ici peut donc comporter soit la structure de fragilisation précédemment décrite, soit un élément résistif formé de deux parties au moins partiellement superposées l'une au-dessus de l'autre, soit une combinaison de la structure de fragilisation et de l'élément résistif formé de deux parties au moins partiellement superposées l'une au-dessus de l'autre.

Chacune des première et deuxième parties de l'élément résistif peut comporter au moins une piste électriquement conductrice ayant au moins un motif de serpentin et/ou plusieurs motifs alternés, entremêlés, enroulés ou entrelacés.

Chacune des portions du substrat disposées dans les trous borgnes peut former un pilier entouré par des parois latérales d'un des trous borgnes et/ou être centrée dans l'un des trous borgnes. La forme des portions du substrat disposées dans les trous borgnes peut donc être sensiblement similaire à celle des trous borgnes. En variante, les portions du substrat présentes dans les trous borgnes peuvent avoir des formes autres que celle des trous borgnes et/ou ne pas être centrées dans les trous borgnes.

Lorsque la puce électronique comporte la structure de fragilisation et lorsque l'élément résistif ne comporte pas les première et deuxième parties, l'élément résistif peut comporter au moins une piste électriquement conductrice ayant au moins un motif de serpentin et/ou plusieurs motifs alternés, entremêlés, enroulés ou entrelacés.

La ou les pistes conductrices de l'élément résistif peuvent avoir une largeur comprise entre environ 1 µm et 20 µm, et/ou des portions de la ou d'une des pistes conductrices qui sont voisines et parallèles peuvent être espacées l'une de l'autre d'une distance comprise entre environ 1 µm et 20 µm. Une telle configuration de l'élément résistif laisse ainsi trop peu d'espace pour une attaque par un faisceau FIB sans que cela engendre une modification importante de la valeur de la résistance électrique de l'élément résistif.

Les portions du substrat disposées dans les trous borgnes peuvent avoir des formes et/ou des dimensions différentes les unes des autres, et les distances entre les parois de fond des trous borgnes et la face avant du substrat peuvent être différentes les unes des autres. Dans cette configuration, les différentes profondeurs des trous borgnes sont obtenues en variant les formes et/ou les dimensions des portions du substrat qui sont conservées dans les trous borgnes. Il est donc possible d'obtenir des trous borgnes de profondeurs différentes sans que cela ne soit visible depuis la face arrière de la puce électronique puisque ces trous borgnes de profondeurs différentes ont toujours une section, au niveau de la face arrière du substrat, de forme et de dimensions extérieures sensiblement similaires entre elles et à celles de chacun des vias électriquement conducteurs, et que les portions du substrat conservées dans les trous borgnes sont masquées par l'élément résistif du côté de la face arrière du substrat.

Les deux extrémités de l'élément résistif peuvent être formées au niveau de la première partie de l'élément résistif. Dans ce cas, des portions de la deuxième partie de l'élément résistif peuvent être disposées en regard des deux extrémités de l'élément résistif, afin de masquer ces extrémités et de les rendre difficilement accessibles.

Le ou les motifs de ladite au moins une piste électriquement conductrice de la première partie de l'élément résistif peuvent être différents du ou des motifs de ladite au moins une piste électriquement conductrice de la deuxième partie de l'élément résistif. Dans une telle configuration, le motif global de l'élément résistif est encore plus complexe et donc très difficile à appréhender par un attaquant.

Ladite au moins une piste électriquement conductrice de la première partie de l'élément résistif peut comporter des portions recouvrant des parois intérieures des trous borgnes. Cette configuration complexifie encore plus le motif de l'élément résistif, le rendant ainsi plus difficilement attaquable.

L'invention porte également sur un procédé de réalisation d'une puce électronique telle que définie ci-dessus, dans lequel la réalisation des vias électriquement conducteurs et des trous borgnes comporte la mise en œuvre des étapes suivantes :
- réalisation d'un masque de gravure sur la face arrière du substrat, dont le motif définit les sections, dans un plan parallèle à la face arrière du substrat, des vias électriquement conducteurs, des trous borgnes et des portions du substrat destinées à être conservées dans les trous borgnes ;
- gravure à travers la face arrière du substrat selon le motif du masque de gravure.

De manière avantageuse, la première partie de l'élément résistif et au moins un matériau électriquement conducteur des vias électriquement conducteurs peuvent être réalisés par la mise en œuvre d'étapes communes.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement une vue en coupe d'une puce électronique, objet de la présente invention, selon un mode de réalisation particulier ;
- la figure 2 représente une vue de dessus d'un exemple de réalisation d'un élément résistif de la puce électronique, objet de la présente invention, selon un mode de réalisation particulier;
- les figures 3 et 4 représentent un exemple de réalisation de vias électriquement conducteurs et de trous borgnes d'une structure de fragilisation d'une puce électronique, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

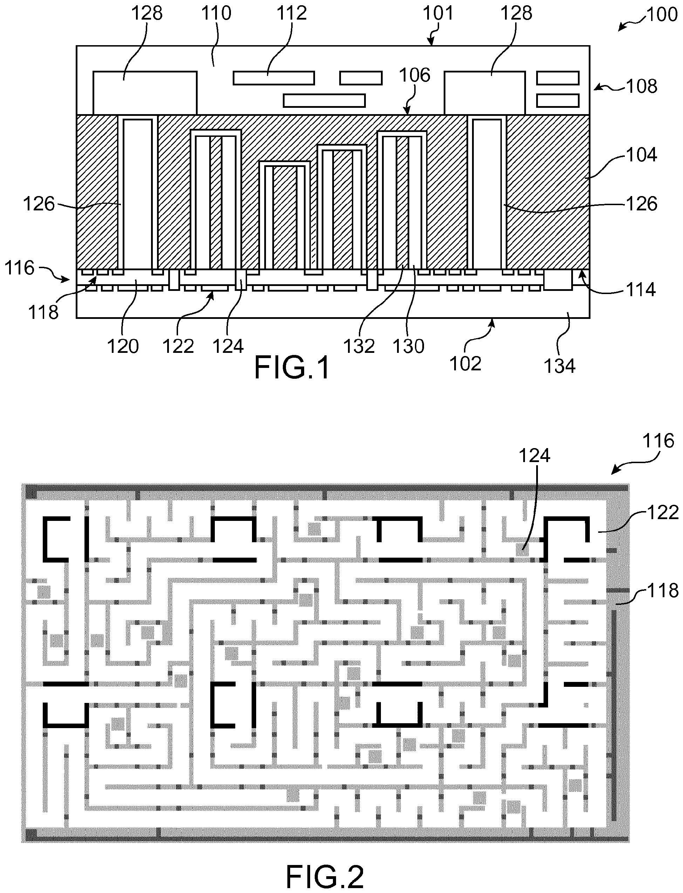

On se réfère tout d'abord à la figure 1 qui représente schématiquement une vue en coupe d'une puce électronique 100 comportant une face avant 101 et une face arrière 102 protégée, selon un mode de réalisation particulier.

La puce électronique 100 est réalisée à partir d'un substrat 104. Le substrat 104 comprend par exemple un matériau semi-conducteur tel que du silicium. L'épaisseur du substrat 104 est par exemple égale à environ 180 µm lorsque la puce électronique 100 est destinée à être disposée dans une carte à puce. D'autres types de substrat peuvent être utilisés pour la réalisation de la puce électronique 100, en fonction de l'utilisation finale de la puce électronique 100.

Le substrat 104 comporte une face avant 106 sur laquelle est réalisé un circuit électronique 108. Le circuit électronique 108 comporte un empilement de couches 110 (diélectriques, métalliques, semi-conductrices) formant notamment une partie active incluant des composants électroniques 112 (transistors, mémoires, etc.) et destinée à être protégée lors d'éventuelles attaques de la puce électronique 100. Bien que non décrits ici, la puce électronique 100 peut comporter des moyens protégeant le circuit électronique 108 depuis la face avant 101.

Le substrat 104 comporte également une face arrière 114 au niveau de laquelle sont réalisés des moyens de protection de cette face arrière 114 de la puce électronique 100.

L'un de ces moyens de protection est un élément résistif 116. Cet élément résistif 116 est disposé à l'aplomb d'au moins une partie du circuit électronique 108, et avantageusement à l'aplomb de toute la partie active de ce circuit, du côté de la face arrière 114 du substrat 104.

Une première partie 118 de cet élément résistif 116 est formée d'une ou plusieurs pistes électriquement conductrices disposées sensiblement au niveau de la face arrière 114 du substrat 104. Cette première partie 118 de l'élément résistif 116 est recouverte par une couche diélectrique 120 sur laquelle est disposée une deuxième partie 122 de l'élément résistif 116 également formée d'une ou plusieurs pistes électriquement conductrices. Une ou plusieurs interconnexions électriques 124 relient électriquement la première partie 118 de l'élément résistif 116 à la deuxième partie 122 de l'élément résistif 116.

La couche diélectrique 120 comporte par exemple du SiO₂ et/ou du SiN, par exemple déposé par PECVD (dépôt chimique en phase vapeur assisté par plasma) et d'épaisseur comprise entre environ 1 µm et 10 µm. La couche diélectrique 120 peut également comporter au moins un matériau polymère et être déposée par centrifugation ou par laminage. Chacune des parties 118, 122 de l'élément résistif 116 est par exemple formée par un dépôt ECD (dépôt électrochimique) ou PVD (dépôt physique en phase vapeur) de cuivre et/ou d'aluminium et d'épaisseur par exemple comprise entre environ 1 µm et 20 µm, et avantageusement comprise entre environ 1 µm et 10 µm.

La deuxième partie 122 de l'élément résistif 116, les parties de la couche diélectrique 120 non recouvertes par la deuxième partie 122 de l'élément résistif 116 et les interconnexions électriques 124 sont recouvertes par une couche de protection 134 formant la face arrière 102 de la puce électronique 100. Cette couche de protection 134 comporte par exemple un polymère opaque et sert notamment de protection vis-à-vis des attaques optiques, chimiques ou encore par FIB.

Dans le mode de réalisation particulier décrit ici, les première et deuxième parties 118, 122 forment ensemble l'élément résistif 116 ici réalisé sous la forme d'un serpentin. La ou les pistes électriquement conductrices de chacune des première et deuxième parties 118, 122 de l'élément résistif 116 peuvent avoir au moins un motif de serpentin et/ou plusieurs motifs alternés, entremêlés, enroulés ou entrelacés, afin de rendre difficilement appréhendable l'élément résistif 116, et notamment de rendre difficilement identifiable l'emplacement des deux extrémités de l'élément résistif 116, dans le cas d'une tentative d'attaque de la puce électronique 100 depuis sa face arrière 102.

Les différentes pistes électriquement conductrices des première et deuxième parties 118, 122 de l'élément résistif 116 sont reliées électriquement en série les unes aux autres par un ou plusieurs contacts électriques 124 qui traversent la couche diélectrique 120. Ainsi, l'élément résistif 116 peut être formé par une alternance de portions de la première partie et de portions de la deuxième partie 122. Les deux extrémités de l'élément résistif 116 sont avantageusement formées au niveau de la première partie 118 de l'élément résistif 116 et sont chacune reliées électriquement au circuit électronique 108 par l'intermédiaire d'un via électriquement conducteur, ou TSV, 126 qui traverse toute l'épaisseur du substrat 104 et débouche sur un plot de contact 128 du circuit électronique 108. Les vias électriquement conducteurs 126 sont remplis au moins partiellement par un matériau électriquement conducteur assurant la connexion électrique entre les extrémités de l'élément résistif 116 et les plots de contact 128 du circuit électronique 108. Une couche de matériau électriquement conducteur, par exemple le même que celui formant les portions de la première partie 118 de l'élément résistif 116, peut notamment recouvrir les parois latérales et les parois de fond des vias électriquement conducteurs 126, le reste du volume des vias électriquement conducteurs 126 pouvant être rempli par un matériau diélectrique, par exemple celui servant également à former la couche diélectrique 120, ou bien rester vide.

Lors du fonctionnement de la puce électronique 100, la valeur de la résistance électrique de l'élément résistif 116 est mesurée entre ses deux extrémités par le circuit électronique 108. Si la puce électronique 100 est attaquée depuis sa face arrière 102 et que cette attaque détériore l'élément résistif 116, la valeur de la résistance électrique mesurée par le circuit électronique 108 change et celui-ci peut alors prendre des mesures appropriées pour traiter cette attaque.

La réalisation de l'élément résistif 116 sous la forme de deux parties 118 et 122 superposées telles que la première partie 118 soit masquée au moins partiellement par la deuxième partie 122 permet de bien dissimuler les extrémités de l'élément résistif 116, ce qui les rend difficilement localisables par un attaquant.

La figure 2 représente une vue de dessus, du côté de la face arrière 102 de la puce électronique 100, d'un exemple de réalisation de l'élément résistif 116. On voit sur cette figure que les deux parties 118, 122 de l'élément résistif 116 couvrent quasiment l'ensemble de la surface de la face arrière 114 du substrat 104, et que les deux extrémités de l'élément résistif 116 formées au niveau de la première partie 118 de l'élément résistif 116 ne sont pas visibles et ne sont pas accessibles depuis la face arrière 102 de la puce électronique 100.

Un autre moyen de protection de la face arrière 102 de la puce électronique 100 est une structure de fragilisation comprenant des trous borgnes 130 qui, contrairement aux premiers vias 126, ne traversent pas toute l'épaisseur du substrat 104. Les trous borgnes 130 traversent la face arrière 114 du substrat 104 et une partie seulement de l'épaisseur du substrat 104.

La profondeur de matériau du substrat 104 traversée par les trous borgnes 130 n'est pas similaire à celle traversée par les vias électriquement conducteurs 126. Pourtant, chacun des trous borgnes 130 comporte une section, au niveau de la face arrière 114 du substrat 104, de forme et de dimensions extérieures (c'est-à-dire au niveau du contour des trous borgnes 130) sensiblement similaires à celles de chacun des vias électriquement conducteurs 126. Pour obtenir cela, les motifs des sections, dans un plan parallèle à la face arrière 114 du substrat 104, des trous borgnes 130 sont tels que des portions 132 du substrat 104 sont destinées à être conservées dans les trous borgnes 130. Ainsi, la surface du substrat 104 exposée à la gravure pour former chacun des trous borgnes 130 est inférieure à celle exposée pour former les trous qui serviront à la réalisation des vias électriquement conducteurs 126. Lors de la mise en œuvre d'une étape de gravure servant à former à la fois les trous des futurs vias 126 et les trous borgnes 130, en raison du phénomène d'ARDE, les profondeurs des trous borgnes 130 réalisés sont inférieures à celles des trous destinés à la réalisation des vias 126. Les portions 132 s'étendent entre la face arrière 114 du substrat 104 et les parois de fond des trous borgnes 130.

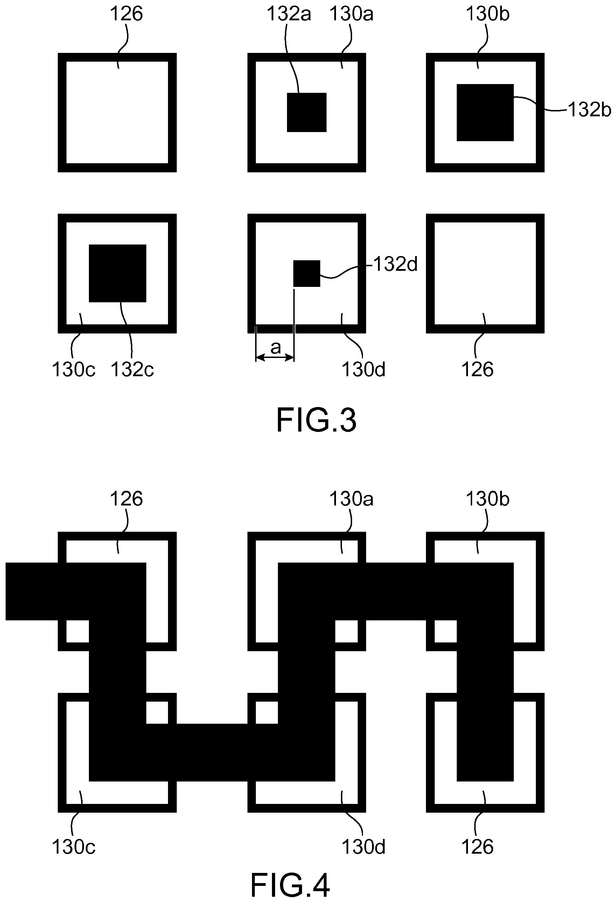

Selon un exemple de réalisation particulier, les trous borgnes 130 sont réalisés tels qu'ils aient des profondeurs différentes les uns des autres. Pour cela, au niveau de la face arrière 114 du substrat 104, les surfaces et/ou les formes et/ou la disposition des portions 132 du substrat 104 qui sont conservées dans les trous borgnes 130 sont différentes les unes des autres. La figure 3 représente schématiquement une vue de la face arrière 114 du substrat 104 à travers laquelle sont réalisés les deux premiers vias 126 et quatre trous borgnes 130a - 130d qui s'étendent dans le substrat 104 avec des profondeurs différentes. Les portions 132a - 132d conservées respectivement dans les trous borgnes 130a - 130d comportent chacune, dans un plan parallèle à la face arrière 114 du substrat 104, une section de forme carrée mais de dimensions différentes les unes des autres. Avec de telles dimensions différentes, les profondeurs des trous borgnes 130a - 130d réalisés sont différentes les unes des autres, comme c'est également le cas dans l'exemple représenté sur la figure 1.

La profondeur de gravure obtenue lors de la réalisation des trous borgnes 130 dépend de la largeur de la tranchée (dimension « a » sur l'exemple de la figure 3) formée autour de la portion 132 et délimitée par les parois latérales extérieures des trous borgnes 130, et également de la surface totale gravée formant le trou borgne 130. Pour chaque trou borgne 130, la profondeur de gravure obtenue dépend des dimensions de la portion 132 du substrat 104 qui n'est pas gravée lors de la réalisation du trou borgne, et également de son positionnement par rapport aux parois latérales extérieures du trou borgne 130 dans lequel la portion 132 est conservée. A titre d'exemple, une portion 132 de section (dans le plan de la face arrière 114 du substrat 104) de forme carrée et de côté égal à environ 20 µm induit, pour un trou borgne 130 de section de forme carrée centrée autour de la portion 132 et de côté égal à environ 55 µm, une différence de profondeur égale à environ 20 µm, lors de la mise en œuvre d'une gravure formant également, à travers le substrat 104, des trous 126 de section de forme carrée et de côté égal à environ 55 µm et de profondeur égale à environ 200 µm.

En variante, il est possible que les trous borgnes 130 soient réalisés tels qu'ils aient tous la même profondeur.

Dans tous les cas, afin que les vias électriquement conducteurs 126 ne soient pas différentiables des trous borgnes 130, il convient que, depuis la face arrière 102 de la puce électronique 100, les portions 132 du substrat 104 localisées dans les trous borgnes 130 ne soient pas visibles. Pour cela, l'élément résistif 116 est réalisé tel qu'il masque ces portions 132. Par exemple, la figure 4 représente les vias 126 et les trous borgnes 130a - 130d précédemment décrits en lien avec la figure 3 et dans lesquels se trouvent les portions 132a - 132d. Les portions 132a - 132d ne sont toutefois pas visibles depuis la face arrière 102 de la puce électronique 100 car une partie de l'élément résistif 116 est disposée en regard de chacune des portions 132 afin de les masquer, mais également en regard des vias 126 afin que ces éléments ne puissent être distingués les uns des autres.

Les diamètres ou les dimensions des côtés extérieurs des vias 124 et des trous borgnes 130 sont par exemple compris entre environ 10 µm et 100 µm.

Les trous borgnes 130 peuvent être remplis d'un matériau diélectrique, par exemple un polymère, et ici similaire à celui remplissant le volume restant des vias électriquement conducteurs 126 non occupé par du matériau électriquement conducteur.

De manière avantageuse, le matériau électriquement conducteur déposé dans les vias électriquement conducteurs 126 pour relier électriquement l'élément résistif 116 au circuit électronique 108 et pouvant servir également à réaliser la première partie 118 de l'élément résistif 116 est également déposé contre les parois latérales et les parois de fond des trous borgnes 130. Cela permet de rendre encore plus difficilement détectables les vias électriquement conducteurs 126.

Lorsque le substrat 104 comporte un semi-conducteur tel que du silicium, les faces avant et arrière 106, 114 du substrat 104 et les parois latérales des trous servant à la réalisation des TSV 126 et éventuellement celles des trous borgnes 130 sont recouvertes d'une couche diélectrique afin d'isoler électriquement le matériau électriquement conducteur disposé dans ces éléments vis-à-vis du semi-conducteur du substrat 104.

Pour réaliser la puce électronique 100, les étapes suivantes sont par exemples mises en œuvre :
Les composants formant la partie active du circuit électronique 108 sont tout d'abord réalisés au niveau de la face avant 106 du substrat 104 via la mise en œuvre d'étapes classiques de la microélectronique. Ces composants font partie de l'empilement de couches 110 qui forme la face avant 101 de la puce électronique 100. Cette face avant est solidarisée à une poignée temporaire formée par exemple par un substrat de semi-conducteur (par exemple de silicium) ou de verre, ce collage correspondant par exemple à un collage oxyde-oxyde lorsque la poignée temporaire comporte un semi-conducteur ou à un collage polymère lorsque la poignée temporaire comporte du verre.

Le substrat 104 est ensuite aminci depuis sa face arrière jusqu'à ce que l'ensemble formé du substrat 104 et du circuit électronique 108 ait l'épaisseur souhaitée, par exemple inférieure ou égale à environ 200 µm.

Un masque dur, comportant par exemple un oxyde, est ensuite réalisé sur la face arrière 114 du substrat 104. Le motif de ce masque définit le motif des trous destinés à la réalisation des vias électriquement conducteurs 126 ainsi que celui des trous borgnes 130 et des portions 132 du substrat 104 destinées à être conservées dans les trous borgnes 130. Les trous des futurs vias 126 et les trous borgnes 130 sont ensuite formés à travers le masque dur par gravure profonde du matériau du substrat 104.

Une couche diélectrique est ensuite déposée, par exemple par PECVD ou SACVD (dépôt chimique en phase vapeur à pression sub-atmosphérique), telle qu'elle recouvre le masque dur disposé sur la face arrière 114 du substrat 104, ainsi que les parois latérales et les parois de fond des trous des futurs TSV 126 et des trous borgnes 130. Les parties de cette couche diélectrique déposées sur les parois de fond des trous des futurs vias 126 sont ensuite supprimées afin que des contacts électriques puissent être ultérieurement réalisés avec les plots 128 par l'intermédiaire des vias 126 à travers le substrat 104. Si le circuit situé en face avant 106 nécessite que la couche électriquement conductrice située dans les trous borgnes 130 soit isolée électriquement du substrat 104, une étape supplémentaire de lithographie peut être insérée afin de protéger les trous borgnes 130 lors de l'étape de gravure de la couche isolante au fond des TSV 126.

La couche électriquement conductrice formant le matériau conducteur des vias 126 ainsi que la première partie 118 de l'élément résistif 116 est ensuite réalisée par exemple par la mise en œuvre des étapes suivantes :
- dépôt d'une couche barrière à la diffusion, comportant par exemple un bicouche Ti/TiN (Ti déposé par exemple par PVD et TiN déposé par exemple par MOCVD, ou dépôt chimique en phase vapeur organométallique), sur la couche diélectrique déposée précédemment ainsi qu'au niveau des parois latérales et des parois de fond des trous des vias 126 et des trous borgnes 130 ;
- dépôt d'une couche de croissance, comportant par exemple du cuivre, sur la couche barrière ;
- lithographie d'un film sec (de type résine positive ou négative) de sorte à définir des régions d'isolation électrique entre différentes parties de la couche électriquement conductrice réalisée et croissance électrolytique, par exemple de cuivre, à partir de la couche de croissance dans les zones où celle-ci est dépourvue de motifs de résine ;
- retrait du film sec, puis gravure des parties de la couche de croissance et de la couche barrière au niveau des régions d'isolation entre les différentes parties de la couche électriquement conductrice (par exemple entre les différentes portions de la première partie 118 de l'élément résistif 116).

La couche diélectrique 120 est ensuite déposée, par exemple par un laminage sous vide, sur l'ensemble de la face arrière de la structure précédemment obtenue, c'est-à-dire sur et entre les portions de la première partie 118 de l'élément résistif 116. Le matériau de la couche diélectrique 120 est par exemple également déposé tel qu'il remplisse les volumes vides restants des vias 126 et les trous borgnes 130. Ensuite, la couche de protection 120 est gravée (ou photo-définie si cette couche est à base de matériau photosensible) afin de former des ouvertures qui serviront à former les contacts électriques 124.

La deuxième partie 122 de l'élément résistif 116 est ensuite réalisée par exemple par la mise en œuvre des étapes suivantes :
- dépôt d'une couche barrière à la diffusion, comportant par exemple un bicouche Ti/TiN, sur la couche diélectrique 120 et dans les ouvertures ;
- dépôt d'une couche de croissance, comportant par exemple du cuivre, sur la couche barrière ;
- lithographie d'un film sec dont le motif (c'est-à-dire les endroits où la résine est retirée) correspond aux régions occupées par la deuxième partie 122 de l'élément résistif 116 et croissance électrolytique, par exemple de cuivre, à partir de la couche de croissance ;
- retrait du film sec, puis gravure des parties de la couche de croissance et de la couche barrière au niveau des régions non occupées par la deuxièmes partie 122 de l'élément résistif 116.

En variante, la deuxième partie 122 de l'élément résistif 116 peut être réalisée par dépôt PVD suivi d'une lithographie et d'une gravure.

La couche de protection 134 est ensuite déposée, par exemple via la mise en œuvre d'un dépôt à la tournette ou par laminage, encapsulant ainsi la deuxième partie 122 de l'élément résistif 116 ainsi que les interconnexions électriques 124 et certaines parties de la première couche de protection 120.

La poignée temporaire est ensuite retirée.

Dans la puce électronique 100 décrite ci-dessus, la face arrière 102 de la puce électronique 100 est protégée par la structure de fragilisation formée des trous borgnes 130 et par l'élément résistif 116 qui comporte les deux parties 118, 122. En variante, il est possible que l'élément résistif 116 ne soit réalisé que sur un seul niveau, c'est-à-dire tel que les portions électriquement conductrices formant cet élément résistif 116 soient uniquement présentes dans un seul plan, au niveau de la face arrière 114 du substrat 104. Selon une autre variante, il est possible que la puce électronique 100 ne comporte pas la structure de fragilisation formée par les trous borgnes 130 mais que l'élément résistif 116 comporte deux parties au moins partiellement superposées comme précédemment décrit.

## Revendications

1. Puce électronique (100) comportant au moins :
- un circuit électronique (108) disposé du côté d'une face avant (106) d'un substrat (104) ;
- un élément résistif (116) disposé du côté d'une face arrière (114) du substrat (104) et à l'aplomb d'au moins une partie du circuit électronique (108) ;
- deux vias électriquement conducteurs (126) traversant le substrat (104) et s'étendant entre les faces avant et arrière (106, 114) du substrat (104), chacun relié électriquement au circuit électronique (108) et à l'une d'au moins deux extrémités de l'élément résistif (116) tel que la valeur de la résistance électrique de l'élément résistif (116) puisse être mesurée par le circuit électronique (108), et masqués au moins partiellement par l'élément résistif (116) du côté de la face arrière (114) du substrat (104) ;
et a): comportant en outre une structure de fragilisation formée de trous borgnes (130) tels que :
- chacun des trous borgnes (130) traverse la face arrière (114) du substrat (104) et une partie de l'épaisseur du substrat (104),
- chacun des trous borgnes (130) comporte une section, au niveau de la face arrière (114) du substrat (104), de forme et de dimensions extérieures sensiblement similaires à celles de chacun des vias électriquement conducteurs (126), et
- dans chacun des trous borgnes (130), au moins une portion (132) du substrat (104) s'étend entre la face arrière (114) du substrat (104) et une paroi de fond du trou borgne (130) et est masquée par l'élément résistif (116) du côté de la face arrière (114) du substrat (104),
et/ou b):
dans laquelle l'élément résistif (116) comporte des première et deuxième parties (118, 122) espacées l'une de l'autre, disposées au moins partiellement l'une au-dessus de l'autre telles que la première partie (118) soit disposée entre la face arrière (114) du substrat (104) et la deuxième partie (122), reliées électriquement l'une à l'autre, et formant ensemble au moins un motif de serpentin et/ou plusieurs motifs alternés, entremêlés, enroulés ou entrelacés.

2. Puce électronique (100) selon la revendication 1, dans laquelle chacune des portions (132) du substrat (104) disposées dans les trous borgnes (130) forme un pilier entouré par des parois latérales d'un des trous borgnes (130) et/ou est centrée dans l'un des trous borgnes (130).

3. Puce électronique (100) selon l'une des revendications précédentes, dans laquelle, lorsque la puce électronique (100) comporte la structure de fragilisation et que l'élément résistif (116) ne comporte pas les première et deuxième parties (118, 122), l'élément résistif (116) comporte au moins une piste électriquement conductrice ayant au moins un motif de serpentin et/ou plusieurs motifs alternés, entremêlés, enroulés ou entrelacés.

4. Puce électronique (100) selon l'une des revendications précédentes, dans laquelle les portions (132) du substrat (104) disposées dans les trous borgnes (130) ont des formes et/ou des dimensions différentes les unes des autres, et les distances entre les parois de fond des trous borgnes (130) et la face avant (106) du substrat (104) sont différentes les unes des autres.

5. Puce électronique (100) selon l'une des revendications précédentes, dans laquelle les deux extrémités de l'élément résistif (116) sont formées au niveau de la première partie (118) de l'élément résistif (116).

6. Puce électronique (100) selon la revendication 5, dans laquelle des portions de la deuxième partie (122) de l'élément résistif (116) sont disposées en regard des deux extrémités de l'élément résistif (116).

7. Puce électronique (100) selon l'une des revendications précédentes, dans laquelle le ou les motifs de ladite au moins une piste électriquement conductrice de la première partie (118) de l'élément résistif (116) sont différents du ou des motifs de ladite au moins une piste électriquement conductrice de la deuxième partie (122) de l'élément résistif (116).

8. Puce électronique (100) selon l'une des revendications précédentes, dans laquelle ladite au moins une piste électriquement conductrice de la première partie (118) de l'élément résistif (116) comporte des portions recouvrant des parois intérieures des trous borgnes (130).

9. Procédé de réalisation d'une puce électronique (100) selon l'une des revendications précédentes, dans lequel la réalisation des vias électriquement conducteurs (126) et des trous borgnes (130) comporte la mise en œuvre des étapes suivantes :
- réalisation d'un masque de gravure sur la face arrière (114) du substrat (104), dont le motif définit les sections, dans un plan parallèle à la face arrière (114) du substrat (104), des vias électriquement conducteurs (126), des trous borgnes (130) et des portions (132) du substrat (104) destinées à être conservées dans les trous borgnes (130) ;
- gravure à travers la face arrière (114) du substrat (104) selon le motif du masque de gravure.

10. Procédé selon la revendication 9, dans lequel la première partie (118) de l'élément résistif (116) et au moins un matériau électriquement conducteur des vias électriquement conducteurs (126) sont réalisés par la mise en œuvre d'étapes communes.

## Patentansprüche

1. Elektronischer Chip (100), umfassend mindestens:
- eine elektronische Schaltung (108), die auf einer Vorderseite (106) eines Substrats (104) angeordnet ist;
- ein Widerstandselement (116), das auf einer Rückseite (114) des Substrats (104) und senkrecht zu mindestens einem Teil der elektronischen Schaltung (108) angeordnet ist;
- zwei elektrisch leitende Durchkontaktierungen (126), die das Substrat (104) durchqueren und sich zwischen den Vorder- und Rückseiten (106, 114) des Substrats (104) erstrecken, wobei jede mit der elektronischen Schaltung (108) und mit mindestens zwei Enden des Widerstandselements (116) verbunden ist, so dass der elektrische Widerstandswert des Widerstandselements (116) von der elektronischen Schaltung (108) gemessen werden kann, und mindestens teilweise durch das Widerstandselement (116) auf der Rückseite (114) des Substrats (104) verdeckt wird;
und a):
ferner umfassend eine aus Blindlöchern (130) so gebildete Schwächungsstruktur, dass:
- jedes der Blindlöcher (130) die Rückseite (114) des Substrats (104) und einen Teil der Dicke des Substrats (104) durchquert,
- jedes der Blindlöcher (130) einen Querschnitt im Bereich der Rückseite (114) des Substrats (104) umfasst, dessen Form und äußere Abmessungen im Wesentlichen ähnlich zu denen jeder der elektrisch leitenden Durchkontaktierungen (126) sind, und
- in jedem der Blindlöcher (130) sich mindestens ein Abschnitt (132) des Substrats (104) zwischen der Rückseite (114) des Substrats (104) und einer Rückwand des Blindlochs (130) erstreckt und vom Widerstandselement (116) auf der Rückseite (114) des Substrats (104) verdeckt wird,
und/oder b):
wobei das Widerstandselement (116) erste und zweite voneinander beabstandete Teile (118, 122) umfasst, die mindestens teilweise aufeinander angeordnet sind, so dass der erste Teil (118) zwischen der Rückseite (114) des Substrats (104) und dem zweiten Teil (122) angeordnet sind, die elektrisch miteinander verbunden sind und gemeinsam mindestens ein Spiralmuster und/oder mehrere abwechselnde, verflochtene, eingerollte oder verschachtelte Muster bilden.

2. Elektronischer Chip (100) nach Anspruch 1, wobei jeder der in den Blindlöchern (130) angeordneten Abschnitte (132) des Substrats (104) eine Stütze bilden, die von den Seitenwänden eines der Blindlöcher (130) umgeben und/oder in einem der Blindlöcher (130) zentriert ist.

3. Elektronischer Chip (100) nach einem der vorangehenden Ansprüche, wobei, wenn der elektronische Chip (100) die Schwächungsstruktur umfasst und das Widerstandselement (116) die ersten und zweiten Teile (118, 122) nicht umfasst, das Widerstandselement (116) mindestens eine elektrisch leitende Bahn umfasst, die mindestens ein Spiralmuster und/oder mehrere abwechselnde, verflochtene, eingerollte oder verschachtelte Muster aufweist.

4. Elektronischer Chip (100) nach einem der vorangehenden Ansprüche, wobei die in den Blindlöchern (130) angeordneten Abschnitte (132) des Substrats (104) zueinander unterschiedliche Formen und/oder Abmessungen aufweisen und die Abstände zwischen den Rückwänden der Blindlöcher (130) und der Vorderseite (106) des Substrats (104) zueinander unterschiedlich sind.

5. Elektronischer Chip (100) nach einem der vorangehenden Ansprüche, wobei die beiden Enden des Widerstandselements (116) im Bereich des ersten Teils (118) des Widerstandselements (116) gebildet sind.

6. Elektronischer Chip (100) nach Anspruch 5, wobei die Abschnitte des zweiten Teils (122) des Widerstandselements (116) gegenüber den beiden Enden des Widerstandselements (116) angeordnet sind.

7. Elektronischer Chip (100) nach einem der vorangehenden Ansprüche, wobei sich das oder die Muster der mindestens einen elektrisch leitenden Bahn des ersten Teils (118) des Widerstandselements (116) von dem oder den Mustern der mindestens einen elektrisch leitenden Bahn des zweiten Teils (122) des Widerstandselements (116) unterscheiden.

8. Elektronischer Chip (100) nach einem der vorangehenden Ansprüche, wobei die mindestens eine elektrisch leitende Bahn des ersten Teils (118) des Widerstandselements (116) Abschnitte umfasst, die die Innenwände der Blindlöcher (130) bedecken.

9. Verfahren zur Erzeugung eines elektronischen Chips (100) nach einem der vorangehenden Ansprüche, wobei die Erzeugung der elektrisch leitenden Durchkontaktierungen (126) und der Blindlöcher (130) die Ausführung der folgenden Schritte umfasst:
- Erzeugung einer Ätzmaske auf der Rückseite (114) des Substrats (104), deren Muster die Querschnitte definiert, in einer zur Rückseite (114) des Substrats (104) parallelen Ebene, der elektrisch leitenden Durchkontaktierungen (126), der Blindlöcher (130) und der Abschnitte (132) des Substrats (104), die dazu bestimmt sind, in den Blindlöchern (130) erhalten zu werden;
- Ätzen durch die Rückseite (114) des Substrats (104) entsprechend der Ätzmaske.

10. Verfahren nach Anspruch 9, wobei der erste Teil (118) des Widerstandselements (116) und mindestens ein elektrisch leitendes Material der elektrisch leitenden Durchkontaktierungen (126) durch Ausführung gemeinsamer Schritte erzeugt werden.

## Claims

1. Electronic chip (100) comprising at least:
- an electronic circuit (108) arranged on the side of a front face (106) of a substrate (104);
- a resistive element (116) arranged on the side of a rear face (114) of the substrate (104) and directly in line with at least one part of the electronic circuit (108);
- two electrically conductive vias (126) passing through the substrate (104) and extending between the front and rear faces (106, 114) of the substrate (104), each electrically connected to the electronic circuit (108) and to one of at least two ends of the resistive element (116) such that the value of the electrical resistance of the resistive element (116) can be measured by the electronic circuit (108), and masked at least partially by the resistive element (116) on the side of the rear face (114) of the substrate (104);
and a):
further comprising a weakening structure formed of blind holes (130) such that:
- each of the blind holes (130) passes through the rear face (114) of the substrate (104) and a part of the thickness of the substrate (104),
- each of the blind holes (130) comprises a section, at the rear face (114) of the substrate (104), of shape and external dimensions substantially similar to those of each of the electrically conductive vias (126), and
- in each of the blind holes (130), at least one portion (132) of the substrate (104) extends between the rear face (114) of the substrate (104) and a bottom wall of the blind hole (130) and is masked by the resistive element (116) on the side of the rear face (114) of the substrate (104),
and/or b):
in which the resistive element (116) comprises first and second parts (118, 122) spaced apart from each other, arranged at least partially one above the other such that the first part (118) is arranged between the rear face (114) of the substrate (104) and the second part (122), electrically connected to each other, and together forming at least one coil pattern and/or several alternating patterns, intermingled patterns, wound up patterns, or intertwined patterns.

2. Electronic chip (100) according to claim 1, in which each of the portions (132) of the substrate (104) arranged in the blind holes (130) forms a pillar surrounded by the side walls of one of the blind holes (130) and/or is centred in one of the blind holes (130).

3. Electronic chip (100) according to one of previous claims, in which, when the electronic chip (100) comprises the weakening structure and when the resistive element (116) does not comprise the first and second parts (118, 122), the resistive element (116) comprises at least one electrically conductive track having at least one coil pattern and/or several alternating patterns, intermingled patterns, wound up patterns, or intertwined patterns.

4. Electronic chip (100) according to one of previous claims, in which the portions (132) of the substrate (104) arranged in the blind holes (130) have shapes and/or dimensions different from each other, and the distances between the bottom walls of the blind holes (130) and the front face (106) of the substrate (104) are different from each other.

5. Electronic chip (100) according to one of previous claims, in which the two ends of the resistive element (116) are formed at the first part (118) of the resistive element (116).

6. Electronic chip (100) according to claim 5, in which portions of the second part (122) of the resistive element (116) are arranged facing two ends of the resistive element (116).

7. Electronic chip (100) according to one of previous claims, in which the pattern(s) of said at least one electrically conductive track of the first part (118) of the resistive element (116) are different from the pattern(s) of said at least one electrically conductive track of the second part (122) of the resistive element (116).

8. Electronic chip (100) according to one of previous claims, in which said at least one electrically conductive track of the first part (118) of the resistive element (116) comprises portions covering internal walls of the blind holes (130).

9. Method for producing an electronic chip (100) according to one of previous claims, in which the production of the electrically conductive vias (126) and the blind holes (130) comprises the implementation of the following steps:
- producing an etching mask on the rear face (114) of the substrate (104), of which the pattern defines the sections, in a plane parallel to the rear face (114) of the substrate (104), of electrically conductive vias (126), blind holes (130) and portions (132) of the substrate (104) intended to be kept in the blind holes (130);
- etching through the rear face (114) of the substrate (104) according to the pattern of the etching mask.

10. The method according to claim 9, in which the first part (118) of the resistive element (116) and at least one electrically conductive material of the electrically conductive vias (126) are produced by the implementation of common steps.
